**Europäisches Patentamt**

**European Patent Office**

**Office européen des brevets**

(11) Veröffentlichungsnummer: **0 214 473 B1**

# EUROPÄISCHE PATENTSCHRIFT

(45) Veröffentlichungstag der Patentschrift: 08.05.91

(51) Int. Cl.⁵: **H04L 12/42**

(21) Anmeldenummer: **86110939.5**

(22) Anmeldetag: **07.08.86**

(54) **Schaltungsanordnung zum Übertragen von Datensignalen zwischen, über ein Ringleitungssystem miteinander verbundenen Steuereinrichtungen.**

(30) Priorität: **11.09.85 DE 3532459**

(43) Veröffentlichungstag der Anmeldung:
**18.03.87 Patentblatt 87/12**

(45) Bekanntmachung des Hinweises auf die Patenterteilung:
**08.05.91 Patentblatt 91/19**

(84) Benannte Vertragsstaaten:
**AT BE CH DE FR GB IT LI LU NL SE**

(56) Entgegenhaltungen:
**EP-A- 0 150 084**
**DE-A- 3 041 600**

(73) Patentinhaber: **Siemens Aktiengesellschaft**
**Wittelsbacherplatz 2**
**W-8000 München 2(DE)**

(72) Erfinder: **Michels-Krohn, Karl-Heinz, Ing. grad.**
**Galileistrasse 2**
**W-8033 Martinsried(DE)**
Erfinder: **Untergruber, Josef, Ing. grad.**
**Heuberweg 17**
**W-8201 Nussdorf/Inn(DE)**

EP 0 214 473 B1

## Beschreibung

Die Erfindung betrifft eine Schaltungsanordnung gemäß Oberbegriff des Patentanspruches 1.

Eine derartige Schaltungsanordnung ist bereits bekannt (EP-A-150 084). Bei dieser bekannten Schaltungsanordnung werden von einem Prozessorsystem her über eine Schnittstelleneinrichtung an ein Ringleitungssystem abzugebende Datensignale bereits in dem Prozessorsystem so zu einem Datensignalblock zusammengestellt, daß dieser bereits eine Empfängeradresse, eine Senderadresse sowie ein das Ende des betreffenden Datensignalblockes anzeigendes Endekriterium aufweist. Ein solcher, zunächst in einem Hauptspeicher des Prozessorsystems zwischengespeicherter Datensignalblock wird anschließend auf ein von dem Prozessorsystem abgegebenes Steuersignal hin unter der Steuerung eines der Schnittstelleneinrichtung zugehörigen Prozessors im Zuge eines DAM-Zyklus über eine Systemschnittstelle in einen Speicherbereich eines Schreib-Lese-Speichers der Schnittstelleneinrichtung übernommen. Nach einer solchen Übernahme werden dann einem "protocol handler" eine diesen Speicherbereich bezeichnende Adresse sowie Angaben bezüglich der Länge des gerade in den Schreib-Lese-Speicher aufgenommenen Datensignalblockes zugeführt. Diese Angaben werden dabei als Anfangszählerstand in ein Längenregister eingetragen. Die weitere Steuerung der Übertragung des betreffenden Datensignalblockes übernimmt dann der "protocol handler". Dabei wird von diesem der Schreib-Lese-Speicher im Zuge eines DMA-Zyklus angesteuert, um einem Durchlaufspeicher dem gespeicherten Datensignalblock zugehörige Datenwörter zuzuführen. Mit jedem Datenblock wird im übrigen der Zählerstand des zuvor erwähnten Längenregisters dekrementiert.

Erkennt nun der "protocol handler" ein über das Ringleitungssystem übertragenes Sendeberechtigungssignal, so steuert dieser die Abgabe von in dem Durchlaufspeicher gerade gespeicherten Datenwörtern an das Ringleitungssystem. Freiwerdende Speicherbereiche dieses Durchlaufspeichers werden dabei in der zuvor angegebenen Weise durch in dem Schreib-Lese-Speicher gespeicherte Datenwörter aufgefüllt. Mit jeder Übernahme eines Datenwortes in den Durchlaufspeicher wird wieder der Zählerstand des zuvor erwähnten Längenregisters dekrementiert, bis der momentane Zählerstand einen Wert "0" annimmt. Damit ist dann die Abgabe eines Datensignalblockes an das Ringleitungssystem abgeschlossen. Erst nach einem vollständigen Umlauf des betreffenden Datensignalblockes wird im übrigen das von dem "protocol handler" zuvor aufgenommene Sendeberechtigungssignal an das Ringleitungssystem wieder abgegeben.

Außerdem ist eine Schaltungsanordnung bekannt (DE-OS 31 36 586) zum Übertragen von Datensignalen zwischen über ein taktgesteuertes, richtungsabhängig betriebenes Ringleitungssystem miteinander verbundenen Steuereinrichtungen, die insbesondere durch Steuereinrichtungen eines Datenvermittlungssystems gebildet sind, wobei über das Ringleitungssystem von Steuereinrichtung zu Steuereinrichtung ein diese jeweils in einen Sendeberechtigungszustand steuerndes Sendeberechtigungssignal übertragbar ist, vor dessen Weitergabe eine den Steuereinrichtungen jeweils zugehörige Senderanordnung von der jeweiligen Steuereinrichtung zu sendende Datensignale zusammen mit mindestens einer eine gewünschte Steuereinrichtung bezeichnende Empfängeradresse und mit einer die jeweilige Steuereinrichtung als Sender bezeichnenden Senderadresse an das Ringleitungssystem abgibt.

Diese bekannte Schaltungsanordnung weist eine aus einer Empfangs- und Sendesteuereinrichtung uno einer Betriebssteuereinrichtung bestehende Senderanordnung auf. Für die Einleitung eines Sendevorganges stellt die Senderanordnung mit Hilfe der Empfangs-und Sendesteuereinrichtung und der Betriebssteuereinrichtung die zu übertragenden Datensignale zu einem Datensignalblock zusammen, wobei den eigentlichen Datensignalen eine Empfängeradresse und eine Senderadresse beigefügt werden. Ein solcher Datensignalblock wird dann anschließend bei Eintreffen des Sendeberechtigungssignals vor dessen Weiterleitung an das Ringleitungssystem abgegeben. Die schaltungstechnische Realisierung der Senderanordnung ist in der genannten Offenlegungsschrift nicht näher ausgeführt.

Es ist nun Aufgabe der vorliegenden Erfindung, einen Weg zu zeigen, wie bei einer Schaltungsanordnung der eingangs genannten Art die den Steuereinrichtungen jeweils zugehörige Senderanordnung ausgebildet werden kann, damit Datensignale mit einem geringen Steuerungsaufwand in den einzelnen Steuereinrichtungen über das Ringleitungssystem übertragen werden können.

Gelöst wird die vorstehend aufgezeigte Aufgabe durch eine Schaltungsanordnung mit den Merkmalen des Patentanspruches 1.

Der Vorteil der erfindungsgemäßen Schaltungsanordnung besteht einerseits darin, daß bei dieser gegenüber dem Stand der Technik mit einem wesentlich geringeren steuerungstechnischen sowie schaltungstechnischen Aufwand eine funktionelle Trennung zwischen der Bereitstellung von Datensignalblöcken und deren Übertragung über das Ringleitungssystem erreicht ist. Andererseits besteht der Vorteil darin, daß für eine Übertragung von Datensignalen über das Ringleitungssystem innerhalb der einzelnen Steuereinrichtungen Datensignalblöcke schrittweise gebildet werden. In einem ersten Schritt werden zunächst von einer der jeweiligen Steuereinrichtung zugehörigen Signalbehandlungseinrichtung zu übertragende Datensignale mit einer Empfängeradresse zu einem Datensignal-Teilblock zusammengefaßt. Anschließend werden einem solchen Datensignal-Teilblock für die Bildung eines vollständigen Datensignalblockes die in Frage kommende Senderadresse zusammen mit einem Endekriterium durch eine Puffersteuereinrichtung angefügt. Damit sind die in den Steuereinrichtungen vorhandenen Signalbehandlungseinrichtungen hinsichtlich der Bereitstellung gleichbleibender Informationen dynamisch entlastet. Dies ist insbesondere dann wesentlich, wenn von den Signalbehandlungseinrichtungen im Echtzeitbetrieb Datensignalblöcke mit einer hohen Geschwindigkeit bereitzustellen sind, wie es beispielsweise in Datenvermittlungssystemen erforderlich ist.

Senderadresse und Endekriterium können dann mit einem geringen schaltungstechnischen Aufwand bereitgestellt werden, wenn ein Register für die Aufnahme von Senderadresse und Endekriterium vorgesehen ist, dessen Registerinhalt auf ein den Leerzustand des Durchlaufspeichers anzeigendes Signal hin auslesbar ist.

Vorzugsweise ist ein weiteres, für die Aufnahme eines Quittungssignals dienendes Register vorgesehen, welches auf ein den Leerzustand des Durchlaufspeichers anzeigendes Steuersignal hin gegenüber dem genannten einen Register zeitlich verzögert ansteuerbar ist und welches auf eine solche Ansteuerung hin im Anschluß an die Senderadresse das genannte Quittungssignal zu der als Empfänger ausgewählten Steuereinrichtung überträgt. Von dieser Steuereinrichtung ist das betreffende Quittungssignal dann in modifizierter Form an die durch die Senderadresse bezeichnete Steuereinrichtung zurückübertragbar. Dies bringt den Vorteil mit sich, daß einerseits lediglich ein geringer schaltungstechnischer Aufwand für die zusätzliche Bereitstellung eines Quittungssignals erforderlich ist und daß andererseits in der als Empfänger ausgewählten Steuereinrichtung für eine Übertragung von den Empfang eines Datensignalblockes betreffenden Informationen keine speziellen Einrichtungen zur Erzeugung von Quittungssignalen erforderlich sind.

Der Steuerungsaufwand für den Empfang und die Weiterleitung eines Sendeberechtigungssignals kann dadurch gering gehalten werden, daß in der Puffersteuereinrichtung eine Speicheranordnung vorgesehen ist, welche ein empfangenes Sendeberechtigungssignal bei Vorliegen eines auszusendenden Datensignalblockes bis zum Auftreten eines von dem den Leerzustand des Durchlaufspeichers anzeigenden Steuersignal abgeleiteten und gegenüber diesem verzögerten Freigabesignals zwischenspeichert, wobei die Verzögerungszeit mindestens so groß gewählt ist, daß vor der Weiterleitung des Sendeberechtigungssignals eine Senderadresse, das Endekriterium und das Quittungssignal an einen weitergeleiteten Datensignal-Teilblock anfügbar sind.

Für die schaltungstechnische Realisierung der bereits genannten Signalbehandlungseinrichtung ist es vorteilhaft, wenn diese aus einer Mikroprozessoranordnung gebildet ist.

Im folgenden wird die Erfindung anhand von Zeichnungen beispielsweise näher erläutert.

FIG 1     zeigt in einem Blockschaltbild ein aus einem Ringleitungssystem gebildetes Datenvermittlungssystem, bei dem die Erfindung angewandt ist,

FIG 2     zeigt in einem Blockschaltbild den Aufbau einer der in FIG 1 lediglich schematisch dargestellten Schnittstellenschaltungen und den Aufbau einer der Vermittlungseinheiten bzw. Leitungsanschlußeinheiten,

FIG 3     zeigt den Aufbau einer in den Schnittstellenschaltungen jeweils vorhandenen Sendepuffer-Anordnung,

FIG 4     zeigt den Aufbau einer Einrichtung für den Empfang eines Sendeberechtigungssignals,

FIG 5     zeigt den Aufbau einer Sendepuffer-Steuereinrichtung und

FIG 6     zeigt den Aufbau einer in den Schnittstellenschaltungen jeweils vorhandenen Empfangspuffer-Anordnung.

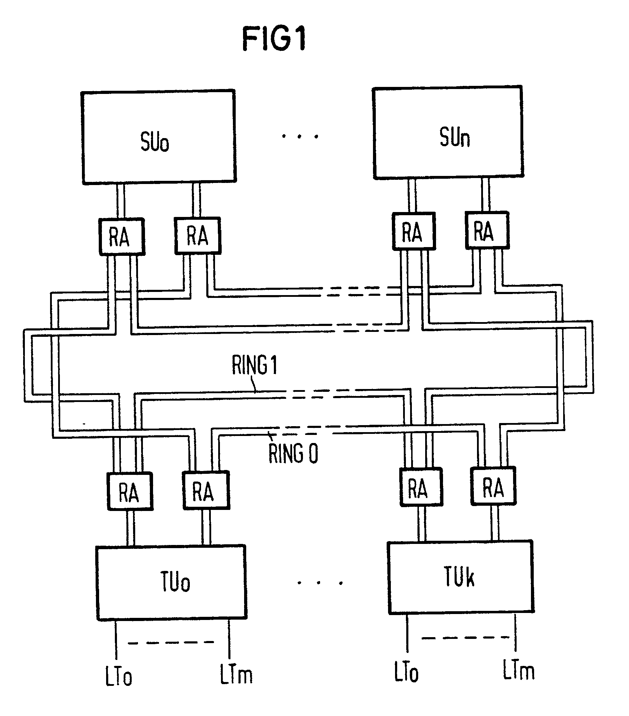

In FIG 1 ist ein Datenvermittlungssystem mit einer Mehrzahl von Vermittlungseinheiten SUO bis SUn dargestellt. Diese Vermittlungseinheiten führen nach dem Lastteilungsprinzip die für die Übertragung von Datensignalen erforderlichen Vermittlungsfunktionen aus. Die Vermittlungseinheiten sind dafür gemeinsam an ein Ringleitungssystem angeschlossen. Ein solches Ringleitungssystem kann aus einer einzigen geschlossenen Ringleitungsanordnung bestehen. Ein solches Ringleitungssystem kann jedoch auch beispielsweise, wie in FIG 1 dargestellt, aus zwei parallel verlaufenden, voneinander unabhängigen Ringleitungsanordnungen RING0 und RING1 aufgebaut sein. Durch eine solche Redundanz ist es beispielsweise bei Ausfall einer der Ringleitungsanordnungen möglich, die Übertragung von Datensignalen auf der jeweils anderen Ringleitungsanordnung auszuführen.

Der Anschluß der genannten Vermittlungseinheiten SUO bis SUn an die beiden Ringleitungsanordnungen erfolgt jeweils über eine für jede der Ringleitungsanordnungen gesonderte Schnittstellenschaltung RA, auf die im folgenden noch näher eingegangen wird.

Mit den genannten Ringleitungsanordnungen RING0 und RING1 ist außerdem eine Mehrzahl von Leitungsanschlußeinheiten TU0 bis TUk jeweils wieder über eine für jede der Ringleitungsanordnungen gesonderte Schnittstellenschaltung RA verbunden. Diese Leitungsanschlußeinheiten dienen zusammen mit den zugehörigen Schnittstellenschaltungen für die Datensignalübertragung zwischen den Vermittlungseinheiten und mit Teilnehmereinrichtungen verbundenen Übertragungsleitungen, die an die Leitungsanschlußeinheiten angeschlossen sind. Jede der Leitungsanschlußeinheiten weist für einen solchen Anschluß von Übertragungsleitungen eine Mehrzahl von Leitungsanschlüssen LT0 bis LTm auf.

Die aus den genannten Vermittlungseinheiten bzw. den Leitungsanschlußeinheiten und den zugehörigen Schnittstellenschaltungen gebildeten Schaltungseinheiten werden im folgenden auch als Steuereinrichtungen bezeichnet. Für den Fall, daß das Ringleitungssystem lediglich aus einer einzigen Ringleitungsanordnung besteht, gehört zu einer Steuereinrichtung lediglich eine einzige Schnittstellenschaltung.

Innerhalb des in FIG 1 dargestellten Vermittlungssystems, d. h. zwischen den Vermittlungseinheiten und den Leitungsanschlußeinheiten, erfolgt die Übertragung von Datensignalen in Form von Datensignalblöcken, welche jeweils als Datensignale im Zuge des Aufbaus einer Verbindung Signalisierungsinformationen und bei einer eingerichteten Verbindung die zwischen den in Frage kommenden Teilnehmereinrichtungen zu übertragenden Nachrichtensignale aufweisen. Dabei enthält jeder zu übertragende Datensignalblock neben den eigentlichen Datensignalen, die jeweils aus einer Mehrzahl von Bits, z. B. 8 Bits, gebildet sind, mindestens eine eine als Empfänger ausgewählte Steuereinrichtung bezeichnende Empfängeradresse, den Beginn und das Ende eines Datensignalblockes bezeichnende Anfangsund Endekennungen, eine die jeweilige Steuereinrichtung als Sender bezeichnende Senderadresse und ein vorbereitetes Quittungssignal. Ein derartig aufgebauter Datensignalblock kann dabei nur dann an eine der Ringleitungsanordnungen abgegeben werden, wenn zuvor von dieser Steuereinrichtung ein von Steuereinrichtung zu Steuereinrichtung übertragenes, diese jeweils in einen Sendezustand steuerndes Sendeberechtigungssignal empfangen wurde.

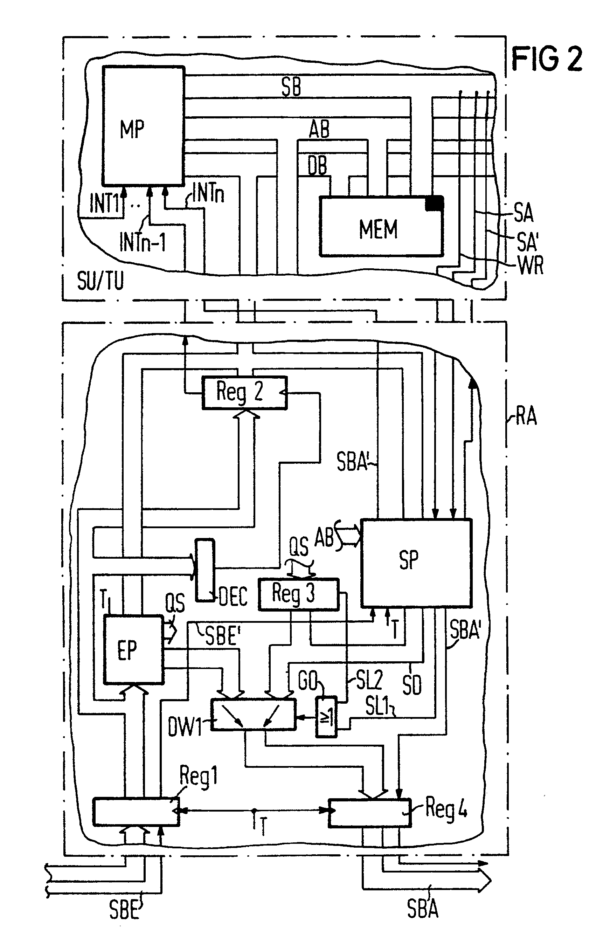

In FIG 2 ist der Aufbau einer Steuereinrichtung detaillierter dargestellt. Wie bereits oben erwähnt, besteht eine solche Steuereinrichtung entweder aus einer Vermittlungseinheit oder aus einer Leitungsanschlußeinheit, in FIG 2 durch die Bezeichnung SU/TU angedeutet, und einer der Anzahl der Ringleitungsanordnungen entsprechenden Anzahl von Schnittstellenschaltungen. Dabei ist in FIG 2 lediglich eine dieser Schnittstellenschaltungen gezeigt, da sämtliche mit den Vermittlungseinheiten bzw. Leitungsanschlußeinheiten verbundenen Schnittstellenschaltungen intern den gleichen Aufbau aufweisen.

Die in FIG 2 mit SU/TU bezeichnete, ausschnittweise dargestellte Einheit (Vermittlungseinheit oder Leitungsanschlußeinheit) weist eine sowohl Sende- als auch Empfangsvorgänge steuernde Mikroprozessoranordnung auf. Von dieser Mikroprozessoranordnung sind dargestellt ein Mikroprozessor MP und eine über ein Busleitungssystem mit diesem verbundene, Festwertspeicher (Programmspeicher) und Schreib-/Lese-Speicher umfassende Speicheranordnung MEM. Das Busleitungssystem besteht dabei aus einem Datenbus DB, einem Adressbus AB und einem Steuerbus SB. Über den Datenbus und den Adressbus sowie über die mit WR und SA bezeichneten Leitungen des Steuerbusses steht auch die Schnittstellenschaltung RA mit dem Mikroprozessor MP in Verbindung. Weiterhin führen zwei Steuerleitungen der Schnittstellenschaltung zu Unterbrechungseingängen INTn-1 und INTn des Mikroprozessors MP hin.

Die Schnittstellenschaltung RA läßt sich in zwei Schaltungsteile aufteilen, nämlich in einen Sendeteil für die Abgabe von Datensignalblöcken an die zugehörige Ringleitungsanordnung und in einen Empfangsteil für die Übernahme von Datensignalblöcken von der zugehörigen Ringleitungsanordnung. Im folgenden wird zunächst auf den Empfangsteil eingegangen.

An der Schnittstelle zur zugehörigen Ringleitungsanordnung ist ein Empfangsregister Reg1 vorgesehen, in welches in paralleler Form über die Ringleitungsanordnung übertragene Signale unter Steuerung eines Taktimpulse T abgebenden, nicht dargestellten Taktgenerators übernommen werden. Die Taktimpulsfolge ist im übrigen auf die Übertragungsgeschwindigkeit auf der Ringleitungsanordnung abgestimmt. Bei den gerade genannten Signalen handelt es sich jeweils um eine vorgegebene Anzahl von Datensignalen und um ein Sendeberechtigungssignal, welches auf einer gesonderten, mit SBE bezeichneten Leitung übertragen wird. Dieses Sendeberechtigungssignal kann dabei durch einen vorgegebenen, für eine bestimmte Zeitdauer auftretenden Zustand eines Binärsignals gebildet sein.

Ausgangsseitig ist das Eingangsregister Reg1 mit seinen die Datensignale führenden Ausgängen einerseits mit einer Empfangspuffer-Anordnung EP und andererseits mit einem Quittungssignalempfänger verbunden. Dieser ist aus einem Adressendecodierer DEC und einem Quittungsregister Reg2 gebildet. Beide stehen dabei eingangsseitig mit den gerade genannten Ausgängen des Eingangsregisters Reg1 in Verbindung. Der Ausgang des Adressendecodierers ist an einen Takteingang des Quittungsregisters angeschlossen. Dieses Quittungsregister wiederum weist Datensignalausgänge auf, die mit dem bereits genannten Datenbus DB verbunden sind.Darüber hinaus führt eine Steuerleitung des Quittungsregisters Reg2 zu dem Unterbrechungseingang INTn-l des Mikroprozessors MP hin.

Die genannte Empfangspuffer-Anordnung EP dient, wie im folgenden noch näher erläutert werden wird, für die Aufnahme von für die jeweilige Steuereinrichtung bestimmten Datensignalblöcken und für die Weiterleitung von für andere, an der Ringleitungsanordnung angeschlossene Steuereinrichtungen bestimmten Datensignalblöcken. Ausgangsseitig ist diese Empfangspuffer-Anordnung einerseits mit dem bereits genannten Datenbus DB und andererseits mit ersten Eingängen einer Datenweiche DWl sowie über eine Leitungsanordnung QS mit Eingängen eines Registers Reg3 verbunden.

Der Sendeteil der Schnittstellenschaltung RA weist eine Sendepuffer-Anordnung SP auf, welche von der bereits genannten Mikroprozessoranordnung über den Datenbus DB, den Adressbus AB und über die Leitungen WR und SA des Steuerbusses SB Signale zugeführt erhält. Weiterhin ist ein Eingang der Sendepuffer-Anordnung mit dem das Sendeberechtigungssignal führenden Ausgang des Eingangsregisters Regl über eine mit SBE′ bezeichnete Leitung verbunden. Schließlich erhält die Sendepuffer-Anordnung SP an einem weiteren Eingang die Taktsignale T zugeführt.

Mit Datensignalausgängen ist die Sendepuffer-Anordnung SP über eine Leitungsanordnung SD mit weiteren Eingängen der bereits erwähnten Datenweiche DWl verbunden. Diese Datenweiche wird unter anderem durch ein auf einer mit SLl bezeichneten Leitung auftretendes Steuersignal von der Sendepuffer-Anordnung her gesteuert. Die Datenweiche ist dafür mit einem Steuereingang über ein ODER-Glied GO mit der Leitung SLl verbunden.

An die zuletzt genannten Eingänge der Datenweiche DWl ist außerdem noch das eingangsseitig mit der Leitungsanordnung QS verbundene Register Reg3 mit seinen Datensignalausgängen angeschlossen. Ein Steuerausgang dieses Registers ist über eine mit SL2 bezeichnete Leitung und das ODER-Glied GO mit dem Steuereingang der Datenweiche DWl verbunden.

Ausgangsseitig ist die Datenweiche DWl mit Datensignaleingängen eines an der Schnittstelle zu der zugehörigen Ringleitungsanordnung vorgesehenen, durch die Taktimpulse T gesteuerten Ausgangsregisters Reg4 verbunden. Dieses Register ist mit einem weiteren Eingang über eine mit SBA′ bezeichnete Leitung an einen eine weiterzuleitendes Sendeberechtigungssignal führenden Ausgang der Sendepuffer-Anordnung SP angeschlossen. Ausgangsseitig ist das Ausgangsregister Reg4 mit der zugehörigen Ringleitungsanordnung verbunden. Die Leitung SBA′ ist im übrigen auch mit dem Unterbrechungseingang INTn des Mikroprozessors MP verbunden. Über eine Leitung SA′ steht schließlich die Sendepuffer-Anordnung noch mit dem Steuerbus SB in Verbindung.

Bezüglich der Emfangspuffer-Anordnung EP, und des Quittungsregisters Reg2 sei noch darauf hingewiesen, daß diese jeweils für eine Ansteuerung vom dem Mikroprozessor MP her außer mit dem Datenbus DB auch noch mit dem Adressbus AB und dem Steuerbus SB in Verbindung stehen. Die jeweiligen Verbindungen sind jedoch zur Vereinfachung der FIG 2 nicht dargestellt.

Im folgenden wird nun zunächst das Zusammenwirken der in FIG 2 dargestellten Schaltungsteile bei der Übertragung von Datensignalen erläutert, ehe auf den Aufbau der Empfangspuffer-Anordnung EP und der Sendepuffer-Anordnung SP näher eingegangen wird.

Es wird zunächst davon ausgegangen, daß von der in FIG. 2 dargestellten Steuereinrichtung Datensignale zu einer anderen Steuereinrichtung zu übertragen sind. Hierzu stellt zunächst die Mikroprozessoranordnung die jeweils aus einer vorgegebenen Anzahl von Bits bestehenden Datensignale zu mindestens einem Datensignalblock zusammen, wobei den eigentlichen Datensignalen eine den Anfang eines Datensignalblockes kennzeichnende Anfangskennung und eine die als Empfänger ausgewählte Steuereinrichtung bezeichnende Empfängeradresse vorangestellt werden. Ein auf diese Weise zusammengestellter Datensignalblock wird anschließend, gesteuert durch über die Leitung WR übertragene Schreibimpulse, wortweise in die Sendepuffer-Anordnung SP übertragen. Unter einem Wort soll dabei eine vorgegebene Anzahl von Bits verstanden werden, die gleichzeitig in Form eines parallelen Zeichens zu der Sendepuffer-Anordnung hin übertragen wird. Beispielsweise kann ein Wort aus l6 Bits bestehen, also aus zwei Datensignalen, wenn jedes Datensignal aus 8 Bits besteht.

Nach der wortweisen Übertragung eines Datensignalblockes gibt dann die Mikroprozessoranordnung über die Leitung SA ein Sendeanforderungssignal an die Sendepuffer-Anordnung SP ab. Dieses bleibt jedoch in der Sendepuffer-Anordnung zunächst bis zum Auftreten eines Sendeberechtigungssignals, welches über das Eingangsregister Regl und die Leitung SBE′ zu der Sendepuffer-Anordnung hin gelangt, unberücksichtigt. Nach dem Auftreten eines Sendeberechtigungssignals wird jedoch der in der Sendepuffer-Anordnung gerade gespeicherte Datensignalblock dann wortweise über das Ausgangsregister Reg4 an die zugehörige Ringleitungsanordnung abgegeben. Dabei werden dem Datensignalblock noch eine das Ende eines Datenblockes anzeigende Endekennung und eine Senderadresse, die die den Datensignalblock sendende Steuereinrichtung bezeichnet, beigefügt sowie ein für den Empfänger vorbereitetes Quittungssignal angefügt. Im Anschluß daran leitet dann die Sendepuffer-Anordnung SP das zuvor empfangene Sendeberechtigungssignal über die Leitung SBA' an das Ausgangsregister Reg4 weiter, welches dieses Sendeberechtigungssignal an die Ringleitungsanordnung abgibt.

Nach der Abgabe des Sendeberechtigungssignals, welche dem Mikroprozessor MP durch ein Signal auf der Leitung SA' angezeigt wird, geht dann die betreffende Steuereinrichtung zunächst in einen Quittungsempfangszustand, in welchem lediglich Empfangsvorgänge abgewickelt werden können und in welchem der Unterbrechungseingang INTn des Mikroprozessors freigegeben ist.

Der Quittungsempfangszustand bleibt im Normalfall bis zum Eintreffen eines Quittungssignals, welches auf den Empfang des gerade übertragenen Datensignalblockes hin von der als Empfänger in Frage kommenden Steuereinrichtung abgegeben wird, erhalten. Bei dem Quittungssignal handelt es sich dabei um das bereits erwähnte, in dem Datensignalblock übertragene vorbereitete Quittungssignal, das in der als Empfänger in Frage kommenden Steuereinrichtung modifiziert wird. Durch dieses Modifizieren werden dem Sender den Empfang des übertragenen Datensignalblockes betreffende Informationen zugeführt. Beispielsweise kann durch ein in bestimmter Weise modifiziertes Quittungssignal der fehlerfreie Übertragung eines Datensignalblockes angezeigt werden.

Beigefügt werden einem modifizierten Quittungssignal die Adresse des Senders des gerade empfangenen Datensignalblockes und die dem Datensignalblock zugehörige Endekennung. Die Adresse und die Endekennung werden dabei dem empfangenen Datensignalblock entnommen.

Das Auftreten eines Quittungssignals wird nun mit Hilfe des bereits erwähnten Quittungssignalempfängers überwacht. Der diesem zugehörige Adressendecodierer DEC vergleicht hierzu ständig die am Ausgang des Eingangsregisters Reg1 (FIG 2) auftretenden Signale mit einem aus der der betreffenden Steuereinrichtung zugewiesenen Adresse und der vereinbarten Endekennung bestehenden Signal. Stellt dabei der Adressendecodierer eine Übereinstimmung fest, so gibt er an seinem Ausgang ein Steuersignal ab. Mit dem Auftreten dieses Steuersignals wird dann das im Anschluß an die Adresse und die Endekennung übertragene Quittungssignal in das Quittungsregister Reg2 übernommen.

Auf die Aufnahme des Quittungssignals hin gibt das Quittungsregister über seinen Steuerausgang ein Quittungsbestätigungssignal an den Mikroprozessor MP ab. Dieser übernimmt daraufhin das gerade in dem Quittungsregister gespeicherte Quittungssignal für eine anschließende Auswertung. Im Zuge dieser Auswertung überführt der Mikroprozessor dann die zugehörige Steuereinrichtung aus dem Quittungsempfangszustand in einen Zustand, in welchem eine erneute Abgabe eines Datensignalblockes möglich ist. Von der Auswertung des Quittungssignals hängt es dabei ab, ob ein gegebenenfalls weiterer, für eine Übertragung anstehender Datensignalblock übertragen wird oder ob zunächst bei einem erkannten Übertragungsfehler Maßnahmen zur Fehlerbehandlung, wie z. B. Maßnahmen zur erneuten Übertragung des zuvor abgegebenen Datensignalblockes, eingeleitet werden. Im übrigen ist in diesem Zustand der Unterbrechungseingang INTn gesperrt.

Darüber hinaus wird in den Steuereinrichtungen ständig das Eintreffen des Sendeberechtigungssignals überwacht, und zwar in der zugehörigen Sendepuffer-Anordnung SP. Diese gibt auf das Auftreten des Sendeberechtigungssignals hin ein Steuersignal an den Unterbrechungseingang INTn des Mikroprozessors MP ab. Ist bis zur Abgabe dieses Steuersignals in einer in einem Quittungsempfangszustand sich gerade befindenden Steuereinrichtung das von dieser erwartete Quittungssignal nicht eingetroffen, so überführt der Mikroprozessor MP die zugehörige Steuereinrichtung in einen Fehlermelde- und/oder Fehlerbehandlungszustand. In diesem Zustand werden gegebenenfalls neben einer Fehlermeldung Maßnahmen zur Fehlerbehandlung eingeleitet. Diese laufen darauf hinaus, daß beispielsweise sämtliche in die Übertragung des nicht quittierten Datensignalblockes einbezogenen Einrichtungen des Vermittlungssystems, d. h. die beiden in Frage kommenden Steuereinrichtungen und die für die Übertragung benutzte Ringleitungsanordnung, schrittweise überprüft werden. Ergibt diese Überprüfung dabei beispielsweise, daß die betreffende Ringleitungsanordnung oder die mit ihr verbundenen Schnittstellenschaltungen RA nicht fehlerfrei arbeiten, so kann die Fehlerbehandlung darin bestehen, daß für die Übertragung von Datensignalblöcken auf die bisher nicht benutzte Ringleitungsanordnung übergewechselt wird. Arbeiten dagegen zentrale Teile der an der Übertragung beteiligten Steuereinrichtungen nicht fehlerfrei, so kann die Fehlerbehandlung darauf hinauslaufen, daß die jeweilige Steuereinrichtung von einer weiteren Datensignalübertragung ausgeschlossen wird.

Im folgenden werden nun die bei Empfang eines Datensignalblockes in einer Steuereinrichtung ablaufenden Steuerungsvorgänge erläutert. Wie bereits oben erwähnt, ist für die Aufnahme von Datensignalblöcken die Empfangspuffer-Anordnung EP vorgesehen. Diese vergleicht bei Auftreten einer den Anfang eines Datensignalblockes bezeichnenden Anfangskennung die zu Beginn des Datensignalblockes übertragene Empfängeradresse mit einer der betreffenden Steuereinrichtung zugewiesenen Adresse. Bei einer Übereinstimmung der miteinander verglichenen Adressen werden dann die zu dem Datensignalblock gehörenden Signale bis zum Auftreten einer das Ende des Datensignalblockes anzeigenden Endekennung in eine Speicheranordnung übernommen. Dort verbleiben sie zunächst bis zur Übernahme durch die Mikroprozessoranordnung der Einheit SU/TU (FIG 2). Die Übernahme kann dabei beispielsweise auf ein von der Empfangspuffer-Anordnung bei Auftreten der Endekennung abgegebenes Steuersignal hin erfolgen. Das Steuersignal kann dafür dem Mikroprozessor an einem weiteren Unterbrechungseingang, beispielsweise dem Eingang INTI, zugeführt werden.

Vor der Übergabe eines Datensignalblockes erfolgt in der Empfangspuffer-Anordnung EP noch eine Überprüfung hinsichtlich seiner fehlerfreien Übertragung, beispielsweise in Form einer Paritätsprüfung. Dabei modifiziert die Empfangspuffer-Anordnung das in dem Datensignalblock übertragene, vom Sender des Datensignalblockes vorbereitete Quittungssignal entsprechend dem Überprüfungsergebnis und überträgt dieses modifizierte Quittungssignal dann zusammen mit der den Sender des gerade empfangenen Datensignalblockes bezeichnenden Adresse und der Endekennung zu dem Register Reg3 hin. Endekennung und Adresse werden dabei dem empfangenen Datensignalblock entnommen. Das Register Reg3 leitet dann die übernommenen Signale über die Datenweiche DWI und das Ausgangsregister Reg4 an die Ringleitungsanordnung weiter. Die Datenweiche DWI wird dazu von dem Register Reg3 her über die Leitung SL2 entsprechend gesteuert.

Stellt dagegen die Empfangspuffer-Anordnung EP bei Auftreten einer Anfangskennung eines Datensignalblockes eine Nichtübereinstimmung der miteinander verglichenen Adressen fest, so leitet diese den Datensignalblock unverändert an die Datenweiche DWI weiter. Über diese Datenweiche und das nachgeschaltete Ausgangsregister Reg4 gelangt dann der Datensignalblock wieder auf die Ringleitungsanordnung und damit zu der in der Ringleitungsanordnung nachfolgenden Steuereinrichtung.

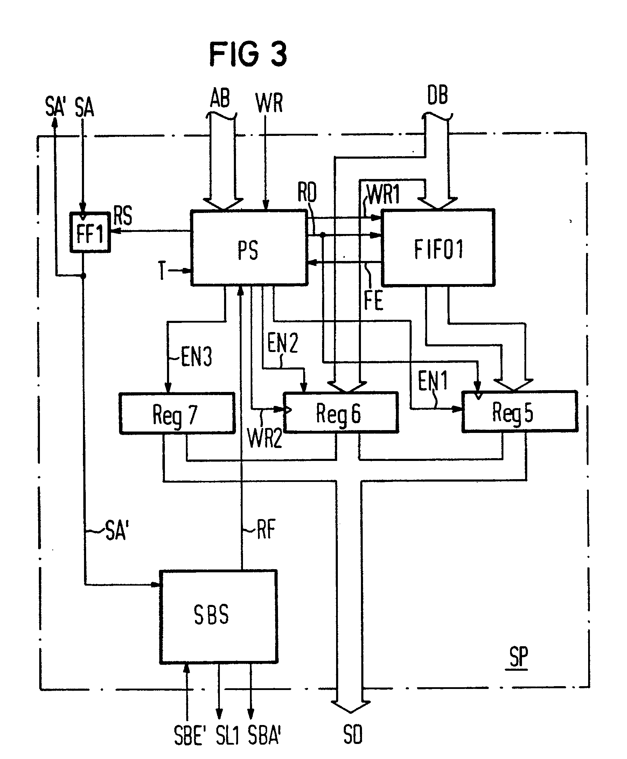

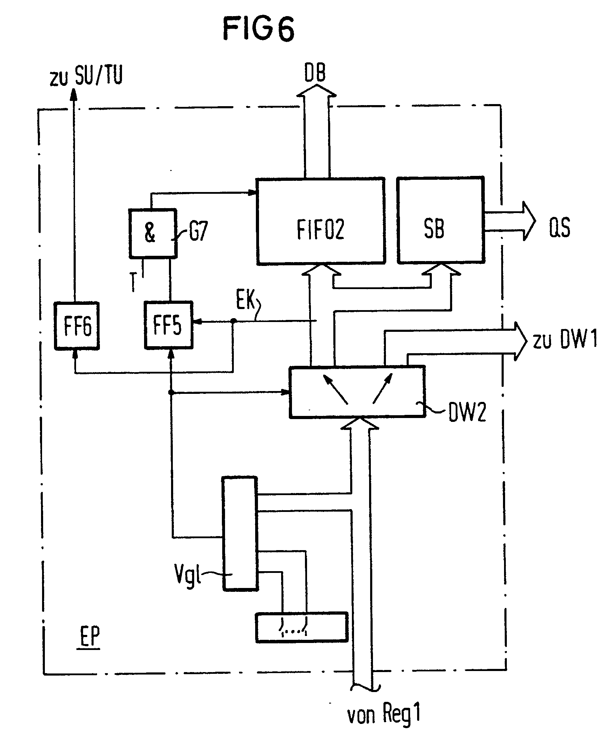

Im folgenden wird nun noch auf den Aufbau der Sendepuffer-Anordnung SP und der Empfangspuffer-Anordnung EP eingegangen. In FIG 3 ist ein Blockschaltbild der Sendepuffer-Anordnung dargestellt. Sie weist u. a. einen mit seinen Datensignaleingängen an den Datenbus DB angeschlossenen Durchlaufspeicher FIFO1 auf. Dieser Durchlaufspeicher, der auch als First-in-first-out-Speicher bezeichnet wird, dient für die bereits erwähnte wortweise Aufnahme eines von der Mikroprozessoranordnung der Einheit SU/TU bereitgestellten Datensignalblockes und für dessen Weiterleitung an die Ringleitungsanordnung auf das Auftreten eines Sendeberechtigungssignals hin. Gesteuert werden die dafür erforderlichen Schreib- und Lesevorgänge von einer in FIG 5 dargestellten Puffersteuereinrichtung PS her, die mit dem Durchlaufspeicher über die Leitungen WRI, RD und FE verbunden ist. Die Leitungen WRI und RD dienen dabei für die Übertragung von Schreibimpulsen bzw. Leseimpulsen. Über die Leitung FE gibt der Durchlaufspeicher ein seinen Leerzustand anzeigendes Steuersignal ab.

Mit seinen Datensignalausgängen ist der Durchlaufspeicher FIFO1 mit Datensignaleingängen eines Registers Reg5 verbunden. Dieses Register, das ausgangsseitig an die in FIG 2 mit SD bezeichnete Leitungsanordnung angeschlossen ist, ist mit einem Takteingang über die bereits erwähnte Leitung RD und mit einem für die Freigabe seiner Datensignalausgänge dienenden Eingang über die Leitung ENI der Puffersteuereinrichtung PS verbunden.

Außerdem weist die Sendepuffer-Anordnung SP zwei weitere Register Reg6 und Reg7 auf. Diese Register sind mit ihren Datensignalausgängen jeweils an die bereits erwähnte Leitung SD angeschlossen. Für die Freigabe dieser Datensignalausgänge weist jedes Register wiederum einen Steuereingang auf, welcher über eine Leitung EN2 bzw. EN3 von der Puffersteuereinrichtung PS her steuerbar ist. Das Register Reg6 dient dabei für die Bereitstellung der in einem Datensignalblock zu übertragenden Senderadresse und Endekennung.

Diese Informationen erhält dieses Register eingangsseitig über den Datenbus DB zugeführt. Die Übernahme von Senderadresse und Endekennung erfolgt mit Hilfe eines Schreibimpulses, welchen die Puffersteuereinrichtung über die Leitung WR2 abgibt. In dem Register Reg7 ist das bereits erwähnte vorbereitete Quittungssignal gespeichert.

Für die Steuerung von Schreibvorgängen in dem Durchlaufspeicher FIFOI ist die Puffersteuereinrichtung PS mit dem Adressbus AB und der Leitung WR verbunden, über die Adressensignale bzw. Schreibimpulse übertragen werden.

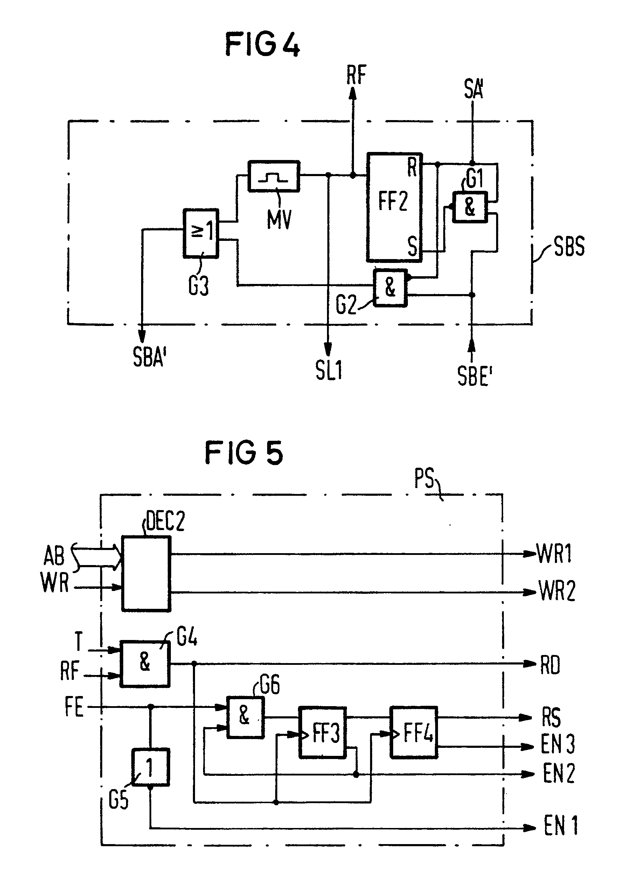

Für die Steuerung von Lesevorängen in dem Durchlaufspeicher und in den Registern Reg5, Reg6 und Reg7 ist die Puffersteuereinrichtung dagegen einerseits für die Übernahme von Taktimpulsen mit der bereits in FIG 2 dargestellten Leitung T und andererseits mit einer Leitung RF verbunden. Über diese Leitung erhält die Puffersteuereinrichtung PS von einer in FIG 4 näher dargestellten Einrichtung für den Empfang eines Sendeberechtigungssignals SBS ein Freigabesignal für das Auslesen eines in dem Durchlaufspeicher FIFOI gespeicherten Datensignalblockes zugeführt. Diese Einrichtung SBS ist mit den in FIG 2 dargestellten Leitungen SBE', SLI und SBA' verbunden. Außerdem ist sie über eine Leitung SA' an den Ausgang einer Kippstufe FFI angeschlossen, die an ihrem Takteingang von dem Mikroprozessor MP her über die Leitung SA das bereits erwähnte Sendeanforderungssignal zugeführt erhält. Ein Rücksetzeingang dieser Kippstufe ist schließlich über die Leitung RS mit der Puffersteuereinrichtung PS verbunden. Im übrigen ist die Leitung SA' auch noch an den Steuerbus SB angeschlossen.

In der in FIG 3 dargestellten Sendepufferanordnung SP laufen folgende Steuerungsvorgänge ab. Für die wortweise Übernahme eines Datensignalblockes in den Durchlaufspeicher FIFO1 werden von dem Mikroprozessor MP her Schreibimpulse in Verbindung mit dem Durchlaufspeicher bezeichnenden Adressensignalen an die Puffersteuereinrichtung PS abgegeben. Diese leitet die Schreibimpulse dann an den Durchlaufspeicher weiter. Der mit Hilfe dieser Schreibimpulse wortweise übernommene Datensignalblock bleibt zunächst im Durchlaufspeicher gespeichert. Nach dieser Übernahme des Datensignalblockes gibt schließlich der Mikroprozessor noch über die Leitung SA ein Sendeanforderungssignal ab, welches die Kippstufe FFI in den aktiven Zustand überführt.

Durch diesen aktiven Zustand der Kippstufe FFI wird der Einrichtung für den Empfang eines Sendeberechtigungssignals SBS das Vorliegen eines zu übertragenden Datensignalblockes angezeigt. Empfängt nun anschließend diese Einrichtung ein Sendeberechtigungssignal so gibt sie ein diesem entsprechendes Signal über die Leitung RF an die Puffersteuereinrichtung PS ab, die daraufhin den Durchlaufspeicher FIFOI und das Register Reg5 mit im Taktraster der Taktimpulse T auftretenden Leseimpulsen beaufschlagt. Außerdem gibt die Puffersteuereinrichtung noch ein Freigabesignal für die Datensignalausgänge des Register Reg5 ab. Damit wird der gerade in dem Durchlaufspeicher FIFOI gespeicherte Datensignalblock wordweise ausgelesen und über das Register Reg5 und die Datenweiche DWI an die Ringleitungsanordnung weitergeleitet. Die Datenweiche wird dafür von der Einrichtung SBS entsprechend gesteuert.

Das gerade erwähnte Auslesen erfolgt nun so lange, bis auf das Auslesen des letzten zu dem Datensignalblock gehörenden Datensignals hin von dem Durchlaufspeicher FIFOI ein dessen Leerzustand anzeigendes Signal über die Leitung FE an die Puffersteuereinrichtung PS abgegeben wird. Dieses Signal bewirkt, daß von der Puffersteuereinrichtung her die Datensignalausgänge des Registers Reg5 gesperrt und daraufhin zunächst die Datensignalausgänge des Registers Reg6 und anschließend die Datensignalausgänge des Registers Reg7 für jeweils einen Taktimpuls T freigegeben werden. Damit werden, wie bereits oben erwähnt, dem gerade übertragenen Datensignalblock noch die Senderadresse einschließlich der Endekennung und das vorbereitete Quittungssignal angefügt.

Nach der Abgabe des Quittungssignals wird von der Puffersteuereinrichtung PS her die Kippstufe FFI in ihren inaktiven Zustand zurückgesetzt. Dieses Rücksetzen bewirkt, daß das von der Einrichtung SBS empfangene Sendeberechtigungssignal über die Leitung SBA' an die Ringleitungsanordnung weitergeleitet und ein dieses Weiterleiten anzeigendes Steuersignal an den Mikroprozessor MP über die Leitung SA' abgegeben wird.

In FIG 4 ist der Aufbau der Einrichtung für den Empfang eines Sendeberechtigungssignals SBS dargestellt. Diese Einrichtung weist eine sogenannte RS-Kippstufe FF2 auf, deren Setzeingang S mit einem ein Ausgangssignal negierenden Ausgang eines UND-Gliedes GI verbunden ist. Dieses UND-Glied ist mit einem Eingang an die das Sendeberechtigungssignal führende Leitung SBE' und mit einem weiteren Eingang an die Leitung SA' angeschlossen, wobei letztere auch an den Rücksetzeingang der Kippstufe FF2 herangeführt ist. Beide Leitungen sind außerdem mit Eingängen eines UND-Gliedes G2 verbunden, wobei der mit der Leitung SA' verbundene Eingang das ihm zugeführte Eingangssignal negiert. Ausgangsseitig ist dieses UND-Glied an einen Eingang eines ODER-Gliedes G3 angeschlossen. Ein weiterer Eingang dieses ODER-Gliedes steht mit dem Ausgang einer monostabilen Kippstufe MV in Verbindung, die ihrerseits eingangsseitig mit dem Ausgang der bereits erwähnten RS-Kippstufe FF2 verbunden ist. An diesem Ausgang sind außerdem die Leitungen SLI und (FIG 3) angeschlossen.

Die in FIG 4 gezeigte Anordnung leitet immer dann sofort ein auf der Leitung SBE' auftretendes Sendeberechtigungssignal über das UND-Glied G2 und das ODER-Glied G3 an das in Fig. 2 dargestellte Ausgangregister Reg4 weiter, wenn die Kippstufe FFI sich im inaktiven Zustand befindet, d.h. wenn von dem Mikroprozessor kein Sendeanforderungssignal zuvor abgegeben worden ist. Befindet sich die Kippstufe FFI dagegen im aktiven Zustand, so ist der gerade angegebene Übertragungsweg für das Sendeberechtigungssignal gesperrt. Bei Eintreffen eines Sendeberechtigungssignals wird die Kippstufe FF2 in ihren aktiven Zustand überführt, in welchem auf der Leitung RF das bereits erwähnte Freigabesignal für das Auslesen eines in dem Durchlaufspeicher FIFOI gespeicherten Datensignalblockes auftritt. Außerdem wird in diesem Zustand über die Leitung SLI ein Steuersi-

gnal an die Datenweiche DWI (Fig.2) abgegeben.

Das Rücksetzen der Kippstufe FFI in den inaktiven Zustand nach der Übertragung eines Datensignalblockes bewirkt, daß auch die Kippstufe FF2 in ihren inaktiven Zustand überführt wird. Bie diesem Übergang gibt die der Kippstufe FF2 nachgeschaltete monostabile Kippstufe MV ein Ausgangssignal vorgegebener Dauer ab, welches als Sendeberechtigungssignal über das ODER-Glied G2 weitergeleitet wird

In FIG 5 ist der Aufbau der Puffersteuereinrichtung PS dargestellt. Die Puffersteuereinrichtung weist danach einen Decodierer DEC2 auf, der eingangsseitig mit dem Adreßbus AB und der Leitung WR verbunden ist. Je nach den auf dem Adreßbus anstehenden Adreßsignalen leitet der Decodierer die auf der Leitung WR übertragenen Schreibimpluse entweder an die Leitung WRI oder an die Leitung WR2 weiter.

Die Puffersteuereinrichtung PS weist außerdem ein UND-Glied G4 auf, welches bei Vorliegen des bereits erwähnten Freigabesignals auf der Leitung RG Taktimpulse T als Leseimpulse an die Leitung RD abgibt. Der Ausgang dieses UND-Gliedes ist außerdem mit Takeingängen zweier hintereinander geschalteter Kippstufen FF3 und FF4 verbunden. Der nichtnegierende Ausgang der Kippstufe FF3 ist dabei direkt an den Datensignaleingang der Kippstufe FF4 angeschlossen. Der Datensignaleingang der Kippstufe FF3 steht mit dem Ausgang eines UND-Gliedes G6 in Verbindung. Eingangsseitig ist dieses UND-Glied einerseits an die in Fig.3 dargestellte Leitung FE und andererseits an den das Ausgangssignal negierenden Ausgang der Kippstufe FF3 angeschlossen. Mit diesem Ausgang ist außerdem die Leitung EN2 verbunden. Die Kippstufe FF4 steht mit ihrem das Ausgangssignal nicht negierenden Ausgang mit der Leitung RS und mit ihrem das Ausgangssignal negierenden Ausgang mit der Leitung EN3 in Verbindung. An die gerade erwähnte Leitung FE ist schließlich noch ein ausgangsseitig mit der Leitung ENI verbundener Inverter G5 angeschlossen.

Die gerade erläuterte, aus dem UND-Glied G6, den beiden Kippstufen FF3 und FF4 und dem Inverter G5 bestehende Schaltungsanordnung gibt bei Auftreten eines den Leer-Zustand des Durchlaufspeichers FIFO1 anzeigenden Signals zunächst ein Sperrsignal für das Sperren der Datensignalausgänge des Registers Reg5 und anschließend jeweils ein Freigabesignal für die Datensignalausgänge der Register Reg6 und Reg7 ab. Außerdem wird von der Kippstufe FF4 auch noch ein das Rücksetzen der Kippstufe FFI bewirkendes Signal bereitgestellt.

In Fig.6 ist der Aufbau der bereits erwähnten Empfangspuffer-Anordnung EP dargestellt. Diese Anordnung weist für den oben angegebenen Adressenvergleich eine mit den Datensignalausgängen des Eingangsregisters Regl (Fig.2) verbundene Vergleicheranordnung Vgl auf, welche bei einer Übereinstimmung der miteinander verglichenen Adresse ein Setzsignal an eine Kippstufe FF5 abgibt. Diese Kippstufe steht ausgangsseitig mit einem Eingang eines UND-Gliedes G7 in Verbindung. An einem weiteren Eingang erhält dieses UND-Glied als Schreibimpulse die Taktimpulse T zugeführt. Am Ausgang dieses UND-Gliedes G7 ist ein Schreibimpuls-Eingang eines Speichers FIFO2 angeschlossen. Bei diesem Speicher handelt es sich beispielsweise um einen Durchlaufspeicher, der mit seinen Datensignalausgängen mit dem Datenbus DB verbunden ist. In diesen Durchlaufspeicher wird bei Vorliegen eines gerade erwähnten Setzsignals der Datensignalblock wortweise übernommen, und zwar mit Hilfe der über das UND-Glied G7 übertragenen Taktimpulse T. Die Übernahme von Datensignalwörtern erfolgt dabei so lange, bis die Kippstufe FF5 durch Auftreten der das Ende des Datensignalblockes anzeigenden Endekennung in ihren inaktiven Zustand zurückgesetzt wird. Für dieses Rücksetzen ist die Kippstufe FF5 am Eingang des Durchlaufspeichers mit der die Endekennung führenden Leitung EK verbunden. Diese Leitung ist außerdem an eine weitere Kippstufe FF6 angeschlossen, die auf das Auftreten der Endekennung hin an ihrem Ausgang das bereits erwähnte, dem Mikroprozessor MP das Bereitstehen eines Datensignalblockes anzeigende Steuersignal abgibt. Auf das Auslesen eines Datensignalblockes aus dem Durchlaufspeicher FIFO2 wird hier nicht näher eingegangen. Dieses Auslesen erfolgt in bekannter Weise durch Zuführen von entsprechenden Steuersignalen über Leitungen des Steuerbusses SB. Das Auslesen wird dabei mit dem Auftreten eines den Leerzustand des Durchlaufspeichers anzeigenden Signals beendet. Dieses Signal erhält der Mikroprozessor MP von dem Durchlaufspeicher FIFO2 her zugeführt, beispielsweise in Form eines Steuersignals über den Steuerbus SB oder als Unterbrechungssignal an einem Unterbrechungseingang.

Der Eingang des Durchlaufspeichers FIFO2 ist mit einer Einrichtung SB für die Überprüfung empfangener Datensignalblöcke verbunden. Diese Einrichtung überprüft empfangene Datensignalblöcke hinsichtlich ihrer fehlerfreien Übertragung, beispielsweise in Form einer Paritätsprüfung. Sie modifiziert dabei das in einem empfangenen Datensignalblock enthaltene, vom Sender vorbereitete Quittungssignal entsprechend dem Überprüfungsergebnis und gibt anschließend dieses modifizierte Quittungssignal dann zusammen mit der den Sender des gerade empfangenen Datensignalblockes bezeichnenden Adresse und der Endekennung an das Register Reg3 ab.

Dem Durchlaufspeicher FIFO2 ist schließlich noch eine Datenweiche DW2 vorgeschaltet. Diese Datenweiche wird von der bereits genannten Vergleicheranordnung Vgl her gesteuert. Sie leitet nur dann zu einem Datensignalblock gehörende Datensignalwörter an den Durchlaufspeicher weiter, wenn die Vergleicheranordnung eine Übereinstimmung der miteinander verglichenen Adressen festgestellt hat. Anderenfalls wird der gesamte empfangene Datensignalblock über die in FIG 2 dargestellte Datenweiche DWI und das Ausgangsregister Reg4 an die zugehörige Ringleitungsanordnung weitergeleitet.

Vorstehend wurde anhand der Figuren 2 und 6 erläutert, daß für den Empfang von Quittungssignalen und Datensignalblöcken in den Steuereinrichtungen jeweils zwei gesonderte Adressendecodierer, nämlich der Adressendecodierer DEC und die Vergleicheranordnung Vgl, vorgesehen sind. Anstelle dieser beiden Adressendecodierer kann jedoch auch ein einziger Adressendecodierer verwendet werden, welcher für die Erkennung von Quittungssignalen und Datensignalblöcken außer den die Adressen führenden Leitungen noch die Anfangskennung und Endekennung führenden Leitungen zugeführt erhält.

## Ansprüche

1. Schaltungsanordnung zum Übertragen von Datensignalen zwischen über ein taktgesteuertes, richtungsabhängig betriebenes Ringleitungssystem (RING0, RING1) miteinander verbundenen Steuereinrichtungen (SU0, RA; ..., SUn, RA; TU0, RA; ...; TUk, RA), die insbesondere durch Steuereinrichtungen eines Datenvermittlungssystems gebildet sind, wobei über das Ringleitungssystem von Steuereinrichtung zu Steuereinrichtung ein diese jeweils in einen Sendeberechtigungszustand steuerndes Sendeberechtigungssignal übertragbar ist, vor dessen Weitergabe eine den Steuereinrichtungen jeweils zugehörige Senderanordnung (MP, MEM, SP), welche eine Signalbehandlungseinrichtung (MP, MEM), einen dieser nachgeschalteten Durchlaufspeicher (FIFO1) sowie eine mit diesem verbundene Puffersteuereinrichtung (PS) aufweist, von der jeweiligen Steuereinrichtung zu sendende Datensignale in Form wenigstens eines aus zumindest einem Wort mit einer vorgegebenen Anzahl von Bits bestehenden Datensignalblockes an das Ringleittungssystem abgibt und dabei in einem solchen Datensignalblock Datensignale zusammen mit mindestens einer eine Steuereinrichtung als Empfänger bezeichnenden Empfängeradresse, einer die jeweilige Steuereinrichtung als Sender bezeichnenden Senderadresse sowie mit einem das Ende des jeweiligen Datensignalblockes anzeigenden Endekriteriums auftreten,

**dadurch gekennzeichnet,**

daß die einer Senderanordnung zugehörige Signalbehandlungseinrichtung (MP, MEM) in einem Datensignalblock zu sendende Datensignale lediglich zusammen mit wenigstens einer Empfängeradresse zu einem Datensignal-Teilblock zusammenstellt, daß auf das Zusammenstellen eines solchen Datensignal-Teilblockes hin der betreffenden Signalbehandlungseinrichtung nachgeschaltete Durchlaufspeicher (FIFO1) für eine vollständige Übernahme des betreffenden Datensignal-Teilblockesvon der Signalbehandlungseinrichtung her direkt ansteuerbar ist,

daß der mit dem Durchlaufspeicher verbundenen Puffersteuereinrichtung (PS) die Übernahme eines Datensignal-Teilblockes in den Durchlaufspeicher durch ein Steuersignal angezeigt ist,

daß auf das Auftreten eines solchen Steuersignals hin von der Puffersteuereinrichtung (PS) bei Empfang eines Sendeberechtigungssignals ein wortweises Auslesen des in den Durchlaufspeicher (FIFO1) zuvor übernommenen Datensignal-Teilblockes für dessen Abgabe an das Ringleitungssystem ermöglicht ist und daß die Puffersteuereinrichtung (PS) auf das Auslesen des letzten zu dem Datensignal-Teilblock gehörenden Wortes hin ein von dem Durchlaufspeicher abgegebenes, dessen Leerzustand anzeigendes Steuersignal zugeführt erhält und daraufhin zunächst eine für die jeweilige Steuereinrichtung in Frage kommende Senderadresse zusammen mit einem Endekriterium dem aus dem Durchlaufspeicher gerade ausgelesenen Datensignal-Teilblock für die Bildung eines vollständigen Datensignalblockes anfügt und anschließend das zuvor empfangene Sendeberechtigungssignal an die im Ringleitungssystem nachfolgende Steuereinrichtung weiterleitet.

2. Schaltungsanordnung nach Anspruch 1,
**dadurch gekennzeichnet,**
daß ein Register (Reg7) für die Aufnahme der genannten Senderadresse und des Endekriteriums vorgesehen ist und daß der Registerinhalt dieses Registers auf ein den Leerzustand des Durchlaufspeichers (FIFO1) anzeigendes Signal hin auslesbar ist.

3. Schaltungsanordnung nach Anspruch 2,
**dadurch gekennzeichnet,**

daß ein weiteres für die Aufnahme eines Quittungssignals dienendes Register (Reg6) vorgesehen ist, welches auf ein den Leerzustand des Durchlaufspeichers (FIFO1) anzeigendes Steuersignal hin gegenüber dem genannten einen Register (Reg7) zeitlich verzögert ansteuerbar ist und welches auf eine solche Ansteuerung hin im Anschluß an die Senderadresse das genannte Quittungssignal zu der als Empfänger ausgewählten Steuereinrichtung überträgt,
und daß von dieser Steuereinrichtung das betreffende Quittungssignal in modifizierter Form an die durch die Senderadresse bezeichnete Steuereinrichtung zurückübertragbar ist.

4. Schaltungsanordnung nach Anspruch 3,
   **dadurch gekennzeichnet,**
   daß in der Puffersteuereinrichtung (PS) eine Speicheranordnung (SBS) vorgesehen ist, welche ein empfangenes Sendeberechtigungssignal bei Vorliegen eines auszusendenden Datensignalblockes bis zum Auftreten eines von dem den Leerzustand des Durchlaufspeichers anzeigenden Steuersignal abgeleiteten und gegenüber diesem verzögerten Freigabesignals zwischengespeichert, wobei die Verzögerungszeit mindestens so groß gewählt ist, daß vor der Weiterleitung des Sendeberechtigungssignals eine Senderadresse, das Endekriterium und das Quittungssignal an einen weitergeleiteten Datensignal-Teilblock anfügbar sind.

5. Schaltungsanordnung nach einem der Ansprüche 1 bis 4,
   **dadurch gekennzeichnet,**
   daß die Signalbehandlungseinrichtung (MP, MEM) aus einer Mikroprozessoranordnung gebildet ist.

**Claims**

1. Circuit arrangement for the transmission of data signals between control devices (SU 0, RA;...; SUn, RA; TUO, RA;...; TUk, RA ), which are interconnected via a clock-controlled loop system (RING0, RING1) operated in a directionally dependent manner, and which are preferably formed by control devices of a data switching system, it being possible to transmit via the loop system from control device to control device a transmit authorisation signal driving the latter into a transmit authorisation state in each case, before the forwarding of which a transmitter arrangement (MP, MEM, SP) associated with the control devices in each case, which has a signal processing device (MP, MEM), an intermediate memory (FIFO1) connected downstream thereof, and a buffer control device (PS) connected to the latter, outputs to the loop system data signals to be transmitted from the respective control device in the form of a data signal block consisting of at least one word with a predetermined number of bits, and there appearing in such a data signal block data signals together with at least one receiver address identifying a control device as receiver, a transmitter address identifying the respective control device as transmitter, and an end criterion indicating the end of the respective data signal block, characterised in that the signal processing device (MP, MEM) associated with a transmitter arrangement combines data signals to be transmitted in a data signal block only together with at least one receiver address to form a data signal sub-block, in that, in response to the combination of such a data signal sub-block, the intermediate memory (FIFO1) connected downstream of the respective signal processing device can be directly selected by the signal processing device for a complete transfer of the respective data signal sub-block, in that a control signal indicates to the buffer control device (PS) connected to the intermediate memory the transfer of a data signal sub-block into the intermediate memory, in that, in response to the appearance of such a control signal from the buffer control device (PS) when a transmit authorisation signal is received, a word-by-word reading out of the data signal sub-block previously transferred into the intermediate memory (FIFO1) is enabled for the output thereof to the loop system, and in that, in response to the reading out of the last word belonging to the data signal sub-block, the buffer control device (PS) receives a control signal output by the intermediate memory indicating the empty state thereof, and thereupon first of all attaches a transmitter address for the respective control device in question, together with an end criterion, to the data signal sub-block just read out of the intermediate memory to form a complete data signal block, and subsequently forwards the previously received transmit authorisation signal to the next control device in the loop system.

2. Circuit arrangement according to Claim I, characterised in that a register (Reg7) for receiving the aforesaid transmitter address and the end criterion is provided, and in that the register contents of said register can be read out in response to a signal indicating the empty state of the intermediate memory (FIFO1).

3. Circuit arrangement according to Claim 2, characterised in that a further register (Reg6) serving to receive an acknowledgement signal is provided which, in response to a control signal indicating the empty state of the intermediate memory (FIFO1), can be selected with a time delay in relation to the aforesaid one register (Reg7), and which, in response to such a selection, transmits the aforesaid acknowledgement signal following the transmitter address to the control device selected as receiver, and in that the respective acknowledgement signal can be transmitted back by said control device in modified form to the control device identified by the transmitter address.

4. Circuit arrangement according to Claim 3, characterised in that there is provided in the buffer control device (PS) a memory arrangement (585) which, given the presence of a data signal block to be transmitted, temporarily stores a received transmit authorisation signal until the appearance of an enable signal which is derived from the control signal indicating the empty state of the intermediate memory and has a delay with respect to the latter, the delay time being selected to be at least long enough for a transmitter address, the end criterion and the acknowledgement signal to be attached to a forwarded data signal sub-block before the transmit authorisation signal is forwarded.

5. Circuit arrangement according to one of Claims 1 to 4, characterised in that the signal processing device (MP, MEM) is formed from a microprocessor arrangement.

**Revendications**

1. Montage pour la transmission de signaux de données entre des dispositifs de commande (SU0, RA; ... SUn, RA; TU0, RA; ...; TUk, RA) qui sont reliés entre eux par l'intermédiaire d'un système de lignes en boucle (RING0, RING1) opérant de façon rythmée et en fonction du sens, et qui sont formés, en particulier, par un dispositif de commande d'un système de transmission de données, du type dans lequel, par l'intermédiaire du système de lignes en boucle, et de dispositif de commande à dispositif de commande, est susceptible d'être transmis un signal d'autorisation d'émission qui commande ledit dispositif de commande dans un état d'autorisation d'émission et avant la transmission duquel un dispositif d'émission (MP,MEM,SP), associé respectivement aux dispositifs de commande et comportant un dispositif de traitement des signaux (MP,MEM), une mémoire de transit (FIFO1), ainsi qu'un dispositif de commande de mémoire tampon (PS), relié à cette dernière, émet, parmi les signaux de données à émettre par le dispositif de commande, au moins sous la forme d'un bloc de signaux de données constitué par au moins un mot avec un nombre prédéterminé de bits, au système de lignes en boucle, et qu'apparaissent dans un tel bloc de signaux de données, des signaux de données avec une adresse de réception désignant comme récepteur un dispositif de commande, avec une adresse d'émission désignant le dispositif de commande concerné comme émetteur ainsi qu'avec un critère final indiquant la fin du bloc de signaux de données, caractérisé par le fait que le dispositif de traitement des signaux (MP, MEM) associé à un dispositif émetteur, assemble les signaux de données d'un bloc de signaux de données uniquement avec au moins une adresse de réception en un bloc partiel de signaux de données, qu'a la suite de l'assemblage d'un tel bloc partiel du signal de données, la mémoire de transit (FIFO1) branchée en aval du dispositif de traitement de signaux concerné est susceptible d'être attaqué directement par le dispositif de traitement des signaux pour la prise en charge complète du bloc partiel de signaux de données concerné, que la prise en charge du bloc partiel de signaux de données dans la mémoire de transit est indiquée par un signal de commande au dispositif de commande de la mémoire tampon (PS) qui est reliée a la mémoire de transit, qu'à l'apparition d'un tel signal de commande, le dispositif de commande de la mémoire tampon (PS) autorise, à la réception d'un signal d'autorisation d'émission, une lecture ligne par ligne du bloc partiel de signaux de données précédemment pris en charge par la mémoire de transit (FIFO1) en vue du passage de ce bloc partiel au système de lignes en boucle, et que le dispositif de commande de la mémoire-tampon (PS), à la suite de la lecture du dernier mot appartenant au bloc partiel de signaux de données, reçoit un signal de commande de la mémoire de transit qui en indique l'état vide, et ajoute ensuite une adresse d'émission, envisageable pour le dispositif de commande concerné, avec un critère final au bloc partiel de signaux de données qui vient d'être extrait de la mémoire de transit pour la formation d'un bloc de signaux de données complet, et transmet ensuite le signal d'autorisation d'émission, reçu précédemment, au dispositif commande suivant du système de lignes en boucle.

2. Montage selon la revendication 1, caractérisé par le fait qu'il est prévu un registre (Reg 7) pour recevoir ladite adresse d'émetteur et du critère final, et que le contenu de ce registre est susceptible d'être lu à la suite d'un signal qui indique l'état vide de la mémoire de transit (FIFO1).

3. Montage selon la revendication 2, caractérisé par le fait qu'il est prévu un second registre (Reg 6) pour la réception d'un signal d'accusé de réception, lequel registre (Reg 6) est susceptible d'être attaqué avec retard dans le temps par rapport audit registre (Reg 7), à la suite d'un signal de commande qui indique l'état vide de la mémoire de transit (FIFO1), et qui, à la suite d'une telle attaque, et à la suite de l'adresse de l'émetteur, transmet ledit signal d'accusé de réception au dispositif de commande qui a été choisi comme récepteur, et qu'à partir de ce dispositif de commande, le signal d'accusé de réception concerné est susceptible d'être renvoyé, sous une forme modifiée, au dispositif de commande qui est désigné par l'adresse de l'émetteur.

4. Montage selon la revendication 3, caractérisé par le fait qu'il est prévu dans le dispositif à mémoire tampon (PS) un dispositif à mémoire (SBS) qui mémorise temporairement un signal d'autorisation d'émission reçu, lors de la présence d'un bloc de signaux de données à èmettre et jusqu'à l'apparition d'un signal d'autorisation qui est dérivé du signal de commande qui indique l'état vide de la mémoire de transit et qui est retardé par rapport audit signal de commande, le temps de retard étant choisi au moins assez grand pour qu'avant la transmission du signal d'autorisation d'émission d'une adresse d'émetteur, le critère final et le signal d'accusé de réception soient susceptibles d'être ajoutés à un bloc partiel de signaux de données qui a été transmis.

5. Montage selon l'une des revendications 1 à 4, caractérisé par le fait que le dispositif de traitement des signaux (MP, MEM) est constitué par un agencement à microprocesseur.

# FIG1

FIG 2

# FIG 3

# FIG 4

# FIG 5

# FIG 6

zu SU/TU

DB

G7

FIFO2

SB

QS

T

FF6

FF5

EK

zu DW1

DW2

Vgl

EP

/,...,/

von Reg1